# EUROPEAN PATENT APPLICATION

(11) **EP 1 486 906 A1**
(43) Date of publication of application: **15.12.2004**
(21) Application number: 03291404.6
(22) Date of filing: 12.06.2003
(51) Int. Cl.: G06K 19/07, G06K 7/00

(54) **Method for changing the behavior of a smart card**

(71) Applicant: Axalto S.A., 92120 Montrouge (FR)
(72) Inventor: Joffray, Olivier, 78810 Feucherolles (FR); Thill, Michel, 78340 Les Clayes Sous Bois (FR)
(74) Representative: Renault, Patricia Marie Jacqueline

(57) **Abstract**

The present invention concerns a method for changing the behavior of a portable object, the portable object being provided with at least storage means and connectors able to connect said portable object to at least an object accepting device consisting in choosing the behavior of the portable object and/or of at least one device with which the portable object communicates according to the physical and/or logical environment of said portable object.

## Description

The present invention concerns a method for changing the behavior of a portable object such as a smart card according to the role it has to play in a determined system and the portable object itself.

This invention is applicable to applications involving a smart card embedding several input/output channels (e.g. I/O1 + I/O2) (I/O is an input/output) as described in a patent application filed by the present applicant the same day as the present application and whose title is "Smart and secure gateway for performing secure operations", hereafter called the Patent.

### TECHNICAL FIELD

Cards with integrated circuit also called smart cards are small plastic devices which contain one or more embedded integrated circuits. A card with integrated circuit can be for example a memory card or a microprocessor card also called microprocessor chip card. A smart card is accessed with a card reader that has an aperture or slot or else into which the smart card is inserted. The smart card reader covers every device used to receive or to be connected with a smart card and work with it (read, write, delete, and/or every possible operation). The smart card reader can be part or linked with a computer, a pinpad or else... The present invention covers smart cards but also every portable object provided with integrated circuit allowing to work or dialog with at least one portable object accepting device and in embodiments described hereafter, portable object with at least one integrated circuit designed to offer security functions such as authentication, validation, encryption/decryption, secure storage, ..... The portable object accepting device may have the form of a housing provided with an aperture or slot to receive the portable object but also any form allowing the portable object to be connected to the portable object accepting device.

Until now, smart card applications involve a unique connection between the card and the card-accepting device (one I/O = I/O1).

However it is possible to connect several independent devices (a set of electronic and mechanical components establishing a data connection with a smart card through one I/O only at a time) to a single smart card embedding several I/Os, as shown in the Patent.

Hence, a same smart card may face several scenarios:
1. When shopping at the supermarket, the user types his PIN (Personal Identification Number) on the point of sale smart card accepting device. The POS (Point Of Sale) device is the only apparatus in relation with the smart card.
2. When shopping on the Internet from home, the user uses the same payment mean: his smart card. He does not type his PIN on the PC (Personal Computer) keyboard, but on a dedicated PIN pad only connected to the smart card, and fully independent from the PC.

Consequently, the same payment application has to wait for the PIN from two different channels depending on the environment.

As described in the Patent, in order to realize a gateway using a smart card, a good solution is to use two I/Os at the same time: I/O1 and I/O2:
1. I/O1 is the mean to exchange data with an insecure environment.
2. I/O2 is the mean to exchange data with a secure environment.
   The smart card placed in the middle of the two environments filters the data sent from an environment to another, or sends and receives some data from both environments.

Then, when shopping on the Internet, it should be avoided to present the PIN through the I/O connected to the PC in order to prevent attacks. Only a second I/O where the personal PIN pad is connected should be used.

The smart card applications have to work differently with a number of independent devices ; the smart card applications have to change according to the role they have to play.

A solution to change the behavior of the smart card according to the scenario is that the POS sends data to the smart card indicating the application required. Another solution consists for the user to input manually said data.

A goal of the solution described hereafter is to offer a solution which does not require any intervention of the user or which does not require information on the application needed from the smart card accepting device.

### BRIEF DESCRIPTION OF THE DRAWINGS

Other purposes, features and advantages of the invention will appear on reading the description which follows of the implementation of the method according to the invention and of a mode of realization of a portable object designed for this implementation, given as a non-limiting example, and referring to the attached drawings in which:
- figure 1 is a schematic view of an example of realization of an electronic unit integrated in a portable object such as a smart card ;
- figure 2 is a schematic view of a non-limiting mode of realization of a smart card designed to implement the method according to the present invention;
- figure 3 is a schematic view of a practical example of a use of the smart card according to the present invention.

### BEST WAY OF REALISING THE INVENTION

This invention belongs to the field of portable object provided with at least memory means and connectors able to connect said portable object to at least an object-accepting device with which the portable object is able to work or dialog.

The method according to the present invention is aimed at changing the behavior of a portable object according to the role the portable object has to play in a particular system.

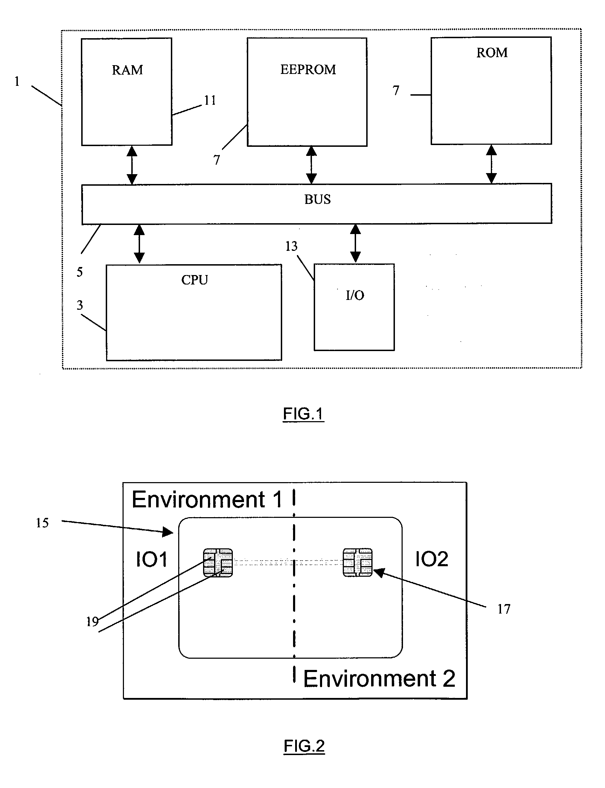

In a particular embodiment of the present invention shown in figure 1, the portable object is a smart card with an integrated electronic unit 1: the electronic unit 1 comprises at least a microprocessor CPU 3 with two-way connection via an internal bus 5 to a non volatile memory 7 of type ROM, EEPROM, Flash, FeRam or else storing at least a program to be executed, a volatile memory 11 of type RAM and input/output means 13 to communicate with the exterior. The unit 1 may comprise additional components not shown, connected to the internal bus. This type of unit is generally manufactured as a monolithic integrated electronic circuit, or chip, which once physically protected by any known means can be assembled on the integrated circuit card or similar for use in various fields, such as the bank and/or electronic payment cards, mobile radio telephony, pay television, health and transport.

As shown in figure 2, the smart card 15 is constituted of said chip in the thickness of the card connected to a module 17. The module 17 comprises a set of flat connectors 19 on the surface of the card allowing said chip to be connected and work with a card-accepting device.

The memory space of the electronic unit 1 consists of the memory RAM 11, the memory ROM and the memory EEPROM 7. This space stores various types of software often represented as software layers. From the hardware layer consisting of the electronic unit 1, we can identify the "core" software layer interfacing directly with the hardware and concerning amongst other things the microprocessor reset, input/output management, interrupt management, the operating system layer OS concerning in particular the system configuration, organization of system operation regarding applications, organization of memory space and addressing, management of peripherals, and the "application" layer with various resident applications for example a program interpreter written in SUN MICROSYSTEMS JAVA language and "user" applications corresponding to precise features (example: bank card, health card, identity card).

As indicated in the Patent mentioned hereabove, the smart card design assigns a specific role to each existing I/O. For example, one I/O(or I/Os) is(are) dedicated to support the exchanges with an insecure or uncontrolled environment (i.e. an environment on which the user cannot rely without restriction such as a PC). The other I/O(s) is(are) connected to environment(s) on which the user can be confident (e.g. a personal PIN pad or a POS payment terminal).

The principle of the present invention is the following:

In the present invention, the smart card takes into account the channel through which the data comes, ie the connector(s) 19 of the smart card which is(are) used, how many connectors are used and/or the type and/or the version of smart card accepting device(s) to which the smart card is connected.

Hence, the smart card automatically knows how to behave, which means more precisely which application from the application layer is required in the smart card and/or in a device with which the smart card communicates (the smart card accepting device (card reader), a server with which the smart card works, or else).

The smart card behavior is defined by the comportment of any applicative piece of software embedded in the applicative layer of the card and/or of at least one device with which the smart card communicates. The smart card behavior varies upon the presence, the absence, the type, the version, of the devices(s) connected to the card.

The method of the present invention consists in choosing the behavior of the portable object (here the smart card) and/or of at least one device with which the portable object communicates according to the physical and/or logical environment of said portable object., i.e. :
- which connector(s) of the portable object is (are) used and/or
- how many connectors are used and/or
- the type and/or the version of accepting device(s) to which the portable object is connected.

Hereafter are given detailed descriptions of a practical example:

### Context:

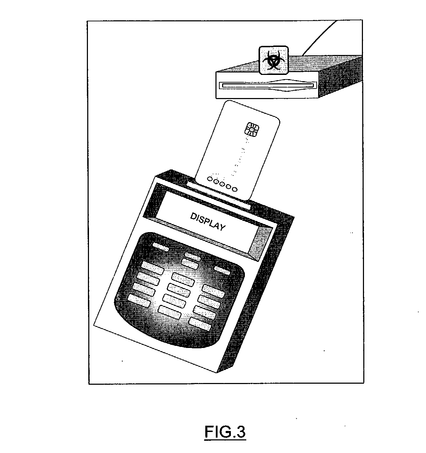

A user has a payment card. He uses it under two different circumstances:
   - First payment scheme : to pay its purchases at merchant shop, such as a supermarket or a gas station. In this case, the card is inserted in POS payment device (compatible with ISO standards only).
   - Second payment scheme : to buy goods or services on the Internet from home using its PC, illustrated on figure 3. To pay over the Internet, the card is directly connected to a USB plug of the PC. It is compatible with USB standard, and recognized by the PC.

The PC is an insecure environment because a virus could perform unwanted actions that the user does not see, including addressing a connected smart card.

### Paying at the merchant shop:

When the card owner pays at the merchant shop, he introduces his card the ISO side first, he checks the amount of the transaction on the merchant payment terminal display, and enters his PIN to validate the transaction.
The merchant payment terminal controls the entire payment scheme. The terminal retrieves the PIN from its keyboard, and presents it to the smart card. All exchanges between the card and the terminal flow through IO1.
Since it detects IO1 is the unique communication channel (and particularly for the PIN presentation), and because the card was reset in an ISO compliant scheme (reset sequence, timing, external clock...), the smart card applies the corresponding payment scheme , the first payment scheme.

### Paying on the Internet from home:

Having chosen the goods or services he wants, the user checks out the Internet site for payment. Having verified the list of its purchases, the user is invited to introduce his payment card on his reader. The user introduces his card the USB side first. A communication channel is established between the card and the PC through the card I/O2. The Internet site verifies the card as it can access it transparently. The reading of a data in the card (e.g. application reference) allows detecting the card and it is then required a personal PIN pad to complete a payment over the Internet. A message asking the user to connect the personal PIN pad is displayed. The user connects the card to his personal PIN pad. This second communication channel flows through the card I/O1. The PC powers the personal PIN pad through the card that relays VCC and GND connectors to the PIN pad side (wires are coated in the card plastic body). The I/O2 is dedicated for USB communication. The I/O1 is compatible with both ISO standards and the PIN pads specific protocols. According to its startup, the card knows if it is inserted in an ISO device or if it should search for one of the personal PIN pads it knows.

When started the I/O2 connected to a USB host, the card detects the presence of the personal PIN pad by regularly polling I/O1 or because it receives a signal from the personal PIN pad through I/O1, (depending if the PIN pad is pro active or passive).

According to one embodiment, the portable object detects the presence of a specific device with which it is connected by regularly polling the input(s)/output(s) or by receiving a signal from it through a specific input/output.

When it receives the essential transaction data (price, goods/services list...) from the Internet site (through I/O2), the card displays the goods/services list on the personal PIN pad display by sending the information through I/O1. The user confirms or cancels the transaction by pressing a key on the PIN pad keyboard. Hence, the card requires the user to enter its PIN by displaying a dedicated message on the personal PIN pad. When the PIN is entered and verified, the card calculates the cryptogram authenticating the payment transaction, based on the data that were displayed on the personal PIN pad display. The smart card applied a corresponding payment scheme, the second payment scheme.

The personal PIN pad may be of different types. It embeds a micro controller and supports a communication protocol. There are different personal PIN pad types embedding different communication protocols, having a small or a large display, more or less keys...

On the same principle, there may be several version of a product when a manufacturer enhances its product.

Accordingly, the smart card embeds several pieces of software is order to adapt its behavior to the PIN pad to which it is connected (type, version...).

When the card starts, it checks for the PIN pad presence and type by sending a specific detection string. If the PIN pad recognizes it, it returns an answer that contains its version and describes its characteristics (display, keyboard; buzzer, ...). If the PIN pad did not answer to the first detection string, the card sends another different detection string to search for another type of personal PIN pad. It continues until it finds the personal PIN pad type. If no compatible PIN pad is found, the transaction is aborted upon the smart card decision.

According to the PIN pad type and version, the card knows the application interface (API) it accepts. Knowing its characteristics, the smart card behavior is adapted according to the user interfaces (message to display, key sequences, ...).

### Differentiating the payment at the merchant shop and on the Internet:

The smart card differentiates the payment schemes according to the number of I/Os used during the transaction, and by detecting the type of the card-accepting device in which it starts (i.e. ISO or USB). In the ISO case, all the data transit through IO1. In the USB case, most of the data flows through I/O2 (card ⇔ PC), while the I/O1 is used to establish the link with the personal PIN pad. The behavior of the smart card changes according to the number of I/O, and so on the number of connectors which are used in the payment system.

In order to support several type of card accepting device through I/O1 (i.e. ISO POS device and personal PIN pad), the card shall be able to multiplex the use of the C7 connector (referenced as the I/O connector in ISO standard). This is described in another patent filed by the present applicant on the same day as the present application and whose title is "Method and system for multiplexing smart card electric connections".

This is a detailed description of a practical example ; many other types of application exist with smart card with multiple I/Os used in different way in different environments where the invention applies.

## Claims

1. Method for changing the behavior of a portable object, the portable object being provided with at least storage means and connectors able to connect said portable object to at least an object accepting device **characterized in that** it consists in choosing the behavior of the portable object and/or of at least one device with which the portable object communicates according to the physical and/or logical environment of said portable object.

2. Method according to claim 1, **characterized in that** it consists in choosing the behavior of the portable object and/or of at least one device with which the portable object communicates according to :
- which connector(s) of the portable object is (are) used and/or
- how many connectors are used and/or
- the type and/or the version of accepting device(s) to which the portable object is connected.

3. Method according to one of the claims 1 or 2, **characterized in that** the portable object detects itself its physical and/or logical environment.

4. Portable object being provided with at least storage means and connectors able to connect said portable object to at least an object accepting device, **characterized in that** it comprises means allowing to choose the behavior of the object and/or of at least one device with which the portable object communicates according to the physical and/or logical environment of the object.

5. Portable object according to claim 4, **characterized in that** it comprises means allowing to choose the behavior of the object and/or of at least one device with which the portable object communicates according to :
- which connector(s) of the portable object is(are) used;
- how many connectors are used and/or
- the type and/or the version of reader(s) to which the portable object is connected.

6. Portable object according to one of the claims 4 or 5, **characterized in that** the portable object is a card with integrated circuit.

7. Portable object according to one of the claims 4 to 6 **characterized in that** it comprises means allowing to detect its physical and/or logical environment.

8. Portable object according to one of the claims 4 to 7, **characterized in that** the portable object has at least two connectors assigned to be inputs/outputs and comprises means allowing to choose the behavior of the portable object and/or of at least one device with which the portable object communicates according to the number of input(s)/output(s) connectors used.

9. Electronic unit intended to be integrated in a portable object according to one of the claims 4 to 8.

10. Computer program including program code instructions to execute the steps of the method according to one of claims 1 to 3 when said program is run in a data processing system.
